# EUROPEAN PATENT APPLICATION

(11) **EP 2 650 858 A2**
(43) Date of publication of application: **16.10.2013**
(21) Application number: 13161128.7
(22) Date of filing: 26.03.2013
(51) Int. Cl.: G08G 5/00, G08G 5/02, G01C 23/00

(54) **Systems and methods for improving runway awareness with takeoff and landing performance data**

(30) Priority: 12.04.2012 US 201213445842
(71) Applicant: Honeywell International Inc., Morristown, NJ 07962-2245 (US)
(72) Inventor: Pepitone, David, Morristown, NJ 07962-2245 (US); Khatwa, Ratan, Morristown, NJ 07962-2245 (US)
(74) Representative: Houghton, Mark Phillip

(57) **Abstract**

Systems and methods for using flight management system (FMS) takeoff and landing (TOLD) data to determine when an alert (advisory and caution) is present. Short-runway alerts are provided on runway line-up on the ground or during approach based on FMS TOLD data. The present invention also integrates FMS TOLD data with a two(or three)-dimensional airport moving map (AMM) display to allow the AMM to display which runways can safely accommodate the aircraft given the aircraft's gross weight and takeoff performance data. Indications are provided when suitable runway length exists for an intersection departure or when suitable runway length exists for landing for any given selected runway or a runway with a land and hold short (LAHSO) clearance in affect.

## Description

### BACKGROUND OF THE INVENTION

The current runway awareness and alerting system (RAAS) provides useful information regarding what runway the host aircraft is heading to and whether that runway provides adequate length for safe operation. The main purpose of that alert is to provide a check for any gross errors such as lining up on a runway length that would not normally be part of the aircraft operators' route structure. However, the information the RAAS provides can be improved.

For example, the current Insufficient Runway Length - On-Ground advisory is provided when the aircraft is lined up with a runway and the runway length available for takeoff is less than a defined nominal takeoff runway length. The nominal runway distance for takeoff is aircraft-type specific and is set by an operator - it does not take into account prevailing conditions.

### SUMMARY OF THE INVENTION

The present invention provides systems and methods for using flight management system (FMS) takeoff and landing (TOLD) data to determine when an alert (advisory and caution) is present.

In one aspect of the invention, short-runway alerts are provided on runway line-up or during approach based on FMS TOLD data. The present invention also integrates FMS TOLD data with a two(or three)-dimensional airport moving map (AMM) display to allow the AMM to display which runways can safely accommodate the aircraft given the aircraft's gross weight and takeoff performance data. Indications are provided when suitable runway length exists for an intersection departure or when suitable runway length exists for landing for any given selected runway or a runway with a land and hold short (LAHSO) clearance in affect.

### BRIEF DESCRIPTION OF THE DRAWINGS

Preferred and alternative embodiments of the present invention are described in detail below with reference to the following drawings:

FIGURE 1 is a block diagram of an exemplary system formed in accordance with an embodiment of the present invention;

FIGURE 2 is a flow diagram of an exemplary process performed by the system shown in FIGURE 1;

FIGURE 3 shows an exemplary airport map display of an aircraft performing an intersection takeoff;

FIGURE 4 shows an exemplary airport map display of an aircraft approaching to land on a short runway;

FIGURE 5 shows a short-runway alert presented visually on a two-dimensional airport moving map display; and

FIGURE 6 shows a short-runway alert presented visually on a three-dimensional airport moving map display.

### DETAILED DESCRIPTION OF THE INVENTION

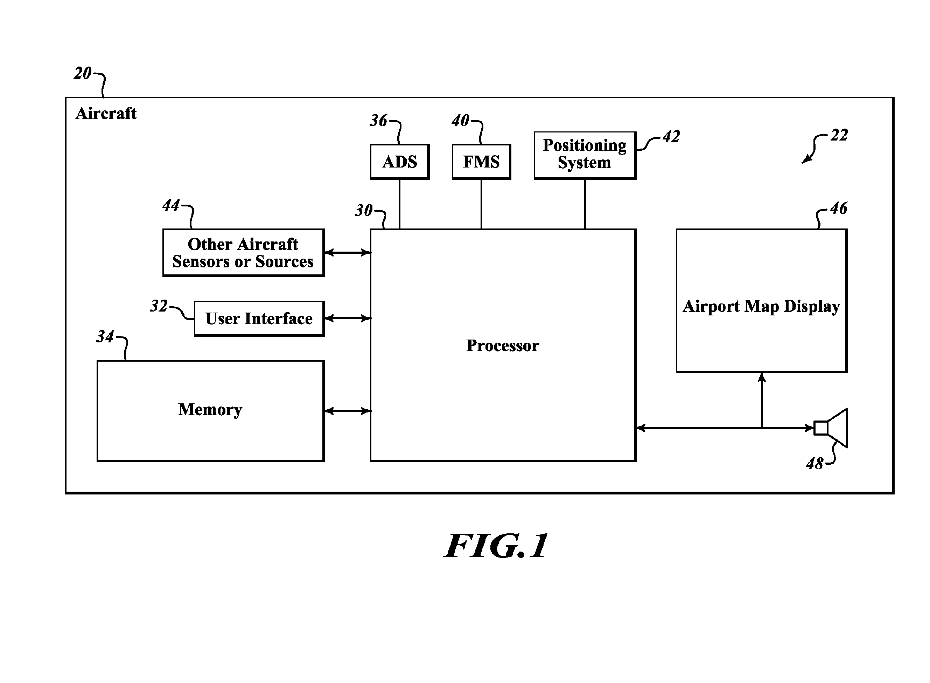

In one embodiment, as shown in FIGURE 1, an aircraft 20 includes a system 22 for providing short-runway alerts during landing approach and/or before take-off. The system 22 includes a processor 30, a user interface (UI) device 32, memory 34 (airport database), an air data system (ADS) 36, a flight management system (FMS) 40, a positioning system (e.g., GPS, INS) 42, other aircraft sensors or sources (e.g., weight-on-wheels (WOW) switch or a remote source accessed via a communication device) 44, and output devices (e.g., a display device 46, a speaker(s) 48). The processor 30 receives data from various sources (the UI device 32, memory 34, the ADS 36, the FMS 40 (takeoff and landing (TOLD) data), the positioning system 42, and/or the other sensors or sources 44), then determines whether the aircraft is within predefined safe parameters for taking off or landing on a selected runway. If the processor 30 determines that the runway is too short, an alert is outputted to the flight crew via the display 46 and/or the speaker(s) 48.

The following is an example of some of the data the processor 30 receives and uses for making a short-runway determination: TOLD data (takeoff/landing distance required (T/LDR)) or raw data such as groundspeed, barometric pressure, ambient pressure, aircraft position, aircraft on ground, aircraft state (e.g., takeoff state, landing state, cruise state), thrust selection (FLEX or full takeoff thrust), aircraft track, outside air temperature (OAT), inertial reference unit (IRU) acceleration, heading, turn rate, altitude, runway distance, runway conditions (e.g., moisture, snow, ice), aircraft weight and balance, aircraft trim and flap positions, or friction level (Mᵤ) (pilot entered). Runway condition (e.g., wet, dry, snow, etc.) is either pilot entry or datalinked. Each of these runway conditions is associated with rolling and braking friction coefficient data, typically as a function of groundspeed.

The processor 30 provides short-runway alerts on runway line-up and during landing approach based on the FMS TOLD data. The TOLD data includes or uses data manually entered by the flight crew and/or received from sensors, such as gross takeoff weight (GTOW), flap setting, thrust setting. The FMS 40 receives air temperature from the ADS 36 and knows the runway because it was entered as part of the flight plan or received the runway from another system (e.g., a runway picker process performed by a runway awareness and alerting system (RAAS)). The FMS 40 computes such requirements as: V speeds, runway length requirements (i.e., TOLD data), obstacle clearance and engine-aircraft limits. The processor 30 integrates the FMS TOLD data with a two-dimensional airport moving map presented on the display 46 to show which runways can safely accommodate the aircraft 20, given the aircraft's gross weight and takeoff performance data - for both takeoff and landing and takeoff/landing distance available (T/LDA) information determined by the processor 30 with available information. In one embodiment, the processor 30 presents on the display 46 an indication of whether suitable runway length exists for departure for an intersection departure (i.e., a departure that doesn't start from a beginning portion of the runway).

In another embodiment, the processor 30 presents on the display 46 an indication of whether suitable runway length exists for landing when the aircraft 20 has been assigned a land and hold short (LAHSO) clearance or for landing on any selected runway.

In one embodiment, the processor 30 receives a pilot selection of desired runway made during flight planning in order to check if a takeoff location meets takeoff requirements. This selection is made based on an action (e.g., point and click using a cursor control device) performed by a user operating the UI device 32 to select a point on a runway presented on the display 46 (an airport moving map (AMM)). Then, the processor 30 determines whether the runway meets takeoff requirements (e.g., accelerate-stop distance) for the selected point based on the TOLD data and TDA based on runway information and the selected point. A similar function can be provided during flight planning for a user selected landing runway.

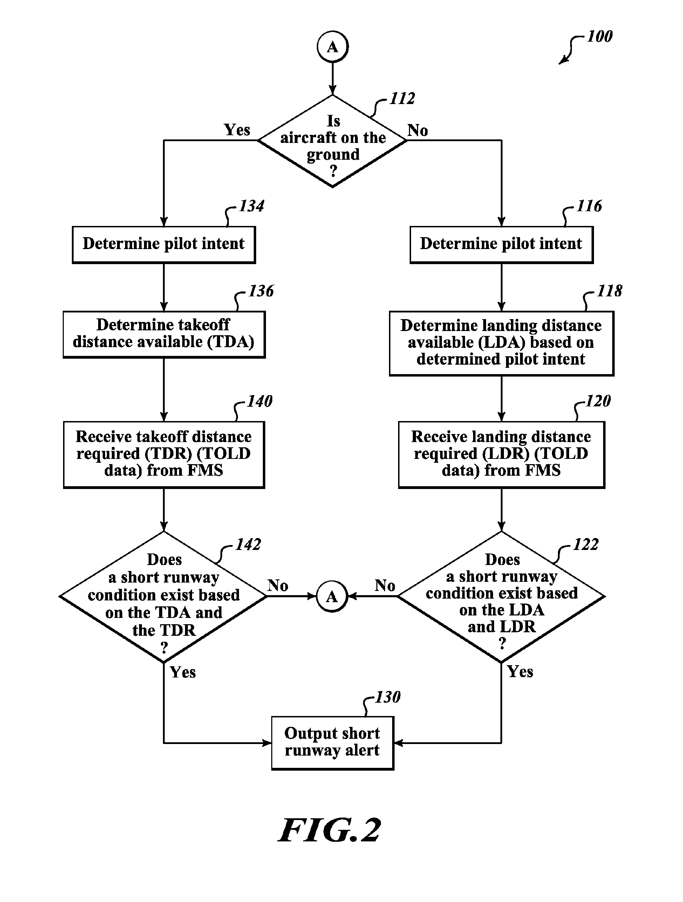

FIGURE 2 illustrates an exemplary process 100 performed by the system 22 shown in FIGURE 1. If the processor 30 determines, at a decision block 112, that the aircraft is not on the ground, based on information, such as from a weight-on-wheels switch and/or corrected BARO or radio altimeter information 16, then at block 116, the processor 30 determines pilot intent. Pilot intent is determined based on various methods, such as automatically by the RAAS or based on entered clearance information, or manually inputted to the FMS by a user selection. Clearance information is received automatically from the FMS 40 or linked from another source or is manually input by the flight crew via the UI device 32. The clearance information may include information other than just the runway, for example, an LAHSO clearance. Next, at a block 118, the processor 30 determines landing distance available (LDA) based upon the determined pilot intent. Note that LDA could be derived from an onboard (or datalinked) airport database once intended landing runway is known. Next, at a block 120, processor 30 receives a landing distance required (LDR) value from the FMS 40. The LDR is effectively the same as the TOLD data. Then, at a decision block 122, the processor 30 determines if a short runway condition exists based on the determined LDA and the received LDR. If the processor determines that no short-runway condition exists, then the process returns to the beginning. If, however, the processor 30 determines that a short-runway condition does exist, then, at a block 130, the system 22 outputs a short runway alert via one of the output devices (the display 46 or speakers 48).

If, at the decision block 112, the aircraft is determined to be on the ground, the processor 30 determines pilot intent at block 134 similar to block 116. Next, at a block 136, the processor 30 determines takeoff distance available (TDA) based on the determined pilot intent. Note that TDA could be derived from an onboard (or datalinked) airport database once intended take-off runway is known. At a block 140, processor 30 receives a takeoff distance required (TDR) value from the FMS 40. The TDR is in the TOLD data. Then, at a decision block 142, the processor 30 determines if a short-runway condition exists, based on the TDA and the TDR. If the processor 30 determines that no short-runway condition exists, then the process returns to the beginning. If the processor 30 determines that a short-runway condition does exist, then, at a block 130(same block as above?) a short-runway alert is output to one of the outputs devices.

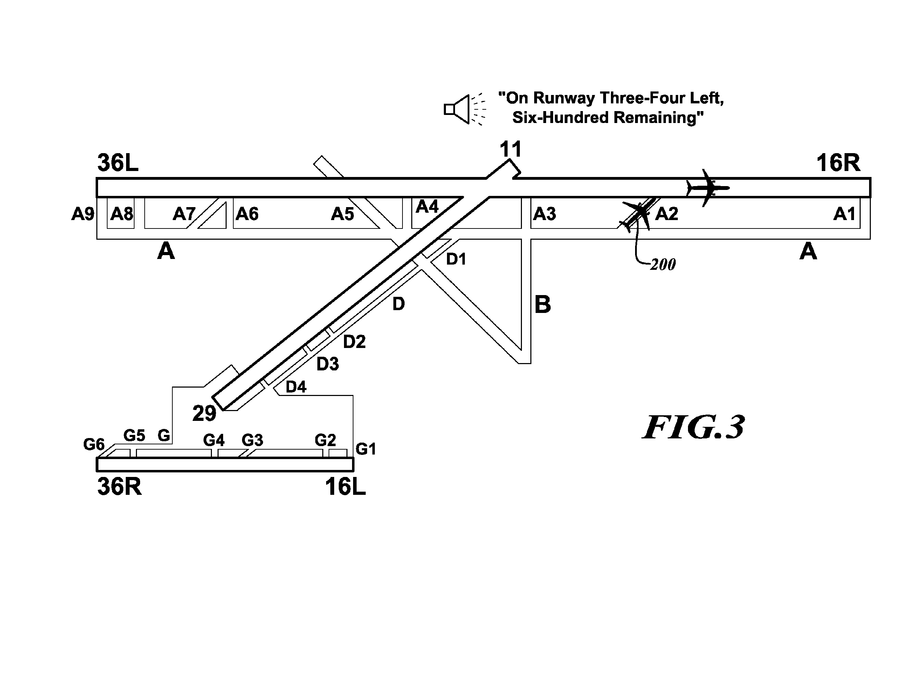

FIGURE 3 illustrates a top-down view of an airport map that shows an ownship icon 200 beginning the process of an intersection takeoff from runway 340° left (34L). In this example, the selected runway is displayed in a first color when the aircraft is still on the taxiway (amber). But when the aircraft takes the runway and the processor 30 determines that the amount of runway remaining is not adequate for a safe takeoff, then the processor 30 visually alters the runway by displaying it in a more distinct color, such as red, thereby visually indicating that an alert condition exists for the flight crew to be aware of.

In other embodiments, the processor 30 presents the aircraft icon in any of a number of different ways in order to visually alert the flight crew to the short-runway situation. For example, the icon flashes at a predefined flash rate or is presented in a unique pattern. Also, text may be displayed on the display device near the aircraft icon 200, which would verbally indicate the specific alert. Also, a prerecorded audio recording indicating that a short-runway alert condition exists may be outputted via the speaker(s) 48.

Other data that the processor 30 uses for determining short-runway condition include aircraft weight, aircraft flap setting, thrust selection, wind speed and direction, runway condition, and slope, air temperature, and altitude of airport.

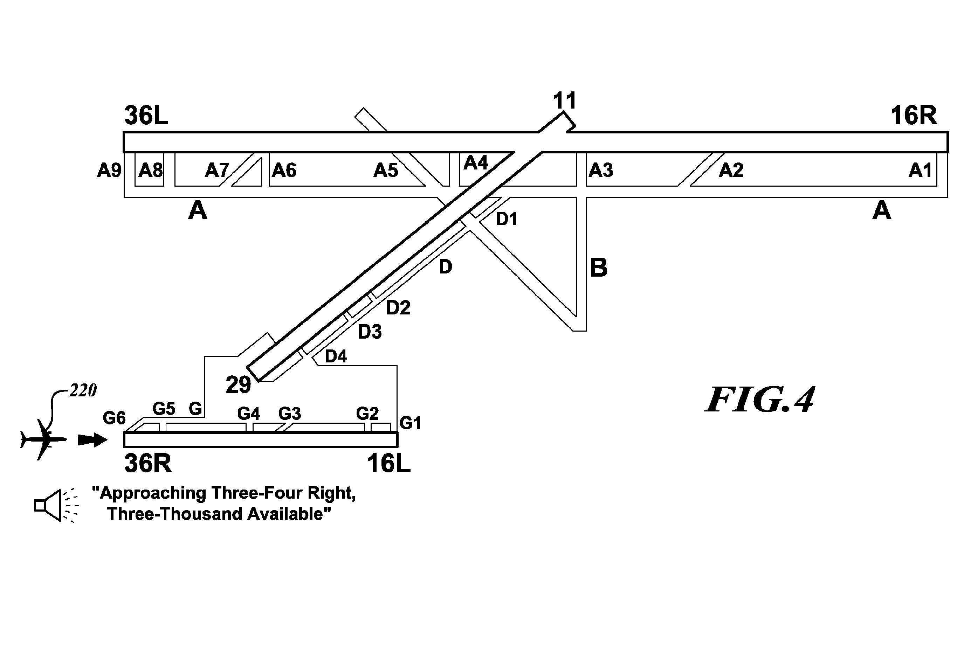

FIGURE 4 illustrates another moving map display of an airport where the ownship identified by the aircraft icon 220 is approaching runway 340° right (34R). If the processor 30 determines that the runway 34R is too short for the aircraft to land according to all the received data as previously described, then an advisory alert is provided to the flight crew when the aircraft descends below approximately 750 feet above field elevation (AFE). A caution alert is enabled and is outputted to the flight crew when the aircraft descends below about 450 feet AFE. Other altitude threshold values may be used. The output of the advisory and the caution alerts are similar to that described above with regard to the on-ground procedure. The advisory alert is indicated with the selected runway presented in a first color scheme and the caution alert causes the color scheme to change to a second scheme.

Aural alerts may be provided instead of or in conjunction with the visual alerts. For example, an advisory alert might be "Approaching Three-Four-Right 3000 feet available" and a caution alert might be "Caution Short Runway" or "Go-Around Short Runway".

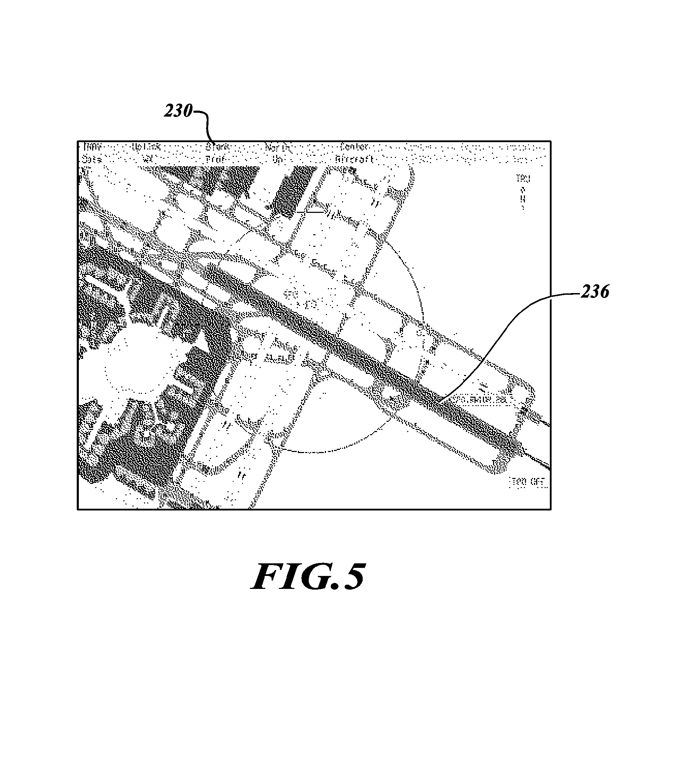

In another embodiment, as shown in FIGURE 5, a display 230 presents an AMM and a visual indication of minimum runway length needed for takeoff and/or landing, depending upon the situation that the aircraft is in. In one embodiment, the indication of the minimum runway length needed for safe landing or takeoff is identified by a green box 236 that is overlaid over the selected or available runway(s). The green box 236 may be presented to a pilot before approaching a selected runway, thereby allowing the pilots to determine if there is enough runway available for performing a safe takeoff. The box 236 may also be presented upon approach to landing. The selected runway(s) that appear to be probable for landing may have this box 236 displayed over those runways to indicate safe landing distance.

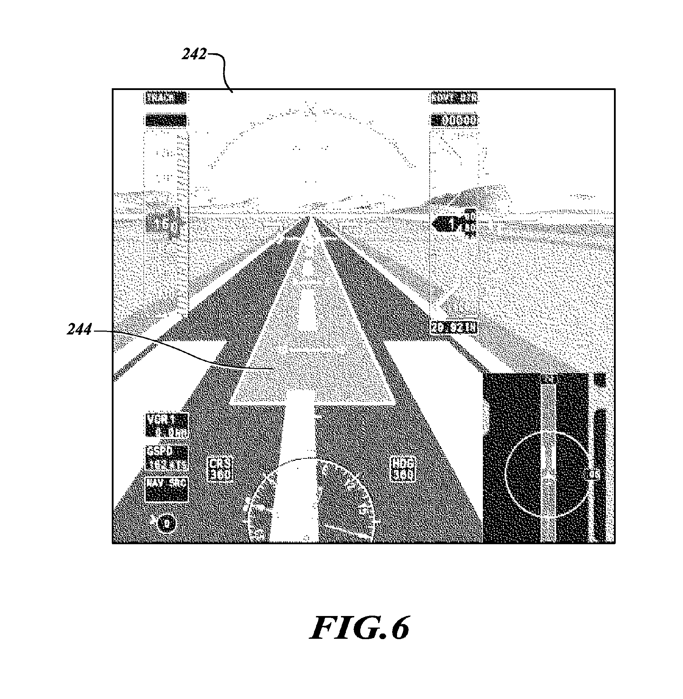

FIGURE 6 illustrates a three-dimensional display 242 of an aircraft, either prior to takeoff from a runway or during landing on a runway. Similar to that described with regard to FIGURE 5, a safe runway distance box 244 is presented in three-dimensional format within the three-dimensional display 242 over the relevant runway image. This provides the flight crew with a quick and easy way to determine if they have the proper amount of safe runway available for landing and/or taking off with regard to all the prevailing conditions (weather, runway, or aircraft condition information) or that the distance is within the FMS TOLD data parameters.

The embodiments of the invention in which an exclusive property or privilege is claimed are defined as follows:

## Claims

1. A method comprising:
at a processing device (30) located on a vehicle,
determining pilot intent based on at least one of runway information received
from a runway picker device or a flight management system (FMS) based on one of a manual or automatic runway selection;
determining runway distance available based on the determined pilot intent; and receiving from the FMS a required runway distance to perform a previously
determined maneuver based on the determined pilot intent;
determining if a short runway condition exists based on the determined runway
distance available and the received required runway distance; and
at an output device (46, 48) located in the vehicle,
outputting an short runway indication if the processor determines that a short
runway condition exists.

2. The method of Claim 1, wherein determining pilot intent comprises receiving clearance information at the processing device and determining further based on the received clearance information, wherein the clearance information comprises an identification of a runway in which the determined maneuver is to be performed.

3. The method of Claim 1, wherein the short runway indication comprises at least one of an audio, visual or tactile indication, wherein the output device is a display device, wherein the short runway indication comprises an icon presented on a map on the display device.

4. The method of Claim 3, wherein the short runway indication comprises a geometric pattern, wherein a length value of the geometric pattern displayed on the map corresponds to the determined amount of runway required,
wherein determining pilot intent comprises receiving a runway selection from at least one
of a processor configured to perform a runway selection process or from a user interface device that is in signal communication with the processing device based upon a user action of the user interface device.

5. The method of Claim 1, further comprising at the processing device,
receiving a selection of a location on the map from the user interface device; and determining the available length of the received runway based on the received location
selection,
wherein the maneuver comprises at least one of a landing maneuver or takeoff maneuver.

6. A system located on a vehicle, the system comprising:
a memory device (34) configured to store runway information;
a device (30) configured to perform a runway picker process;
a flight management system (FMS) (40) configured to provide clearance information and
takeoff and landing (TOLD) data;
a processing device (30) in signal communication with the memory device, the device
and the FMS, the processing device configured to,
determine pilot intent based on at least one of information received from the
device configured to perform the runway picker process or information from the FMS based on one of a manual or automatic runway selection;
determine runway distance available based on the determined pilot intent; receive from the FMS a required runway distance for performing a previously
determined maneuver based on the determined pilot intent;
and
determine if a short runway condition exists based on the determined runway
distance available and the received required runway distance; and
an output device (46, 48),
outputting an short runway indication if the processor determines that a short
runway condition exists.

7. The system of Claim 6, wherein the processing device receives clearance information from the FMS and determines the pilot intent further based on the received clearance information, wherein the clearance information comprises an identification of a runway in which the determined maneuver is to be performed.

8. The system of Claim 6, wherein the short runway indication comprises at least one of an audio, visual or tactile indication, wherein the output device is a display device, wherein the short runway indication comprises an icon presented on a map on the display device.

9. The system of Claim 8, wherein the short runway indication comprises a geometric pattern, wherein a length value of the geometric pattern displayed on the map corresponds to the determined amount of runway required, wherein the processing device receives a runway selection from at least one of the device configured to perform the runway picker process or from a user interface device that is in signal communication with the processing device based upon a user action of the user interface device.

10. The system of Claim 6, wherein the processing device is further configured to,
receive a selection of a location on the map from the user interface device; and determine the available length of the received runway based on the received location
selection,
wherein the maneuver comprises at least one of a landing maneuver or takeoff maneuver.
